# NEUE EUROPÄISCHE PATENTSCHRIFT

(11) **EP 1 813 832 B2**
(45) Veröffentlichungstag und Bekanntmachung des Hinweises auf die Entscheidung über den Einspruch: **10.08.2016**
(45) Hinweis auf die Patenterteilung: 21.10.2009
(21) Anmeldenummer: 07009775.3
(22) Anmeldetag: 06.08.2002
(51) Int. Cl.: F16D 25/10, F16D 21/06, F16D 25/0638, F16D 25/12

(54) **Kupplungssystem mit einer nasslaufenden oder/und hydraulisch betätigbaren Mehrfach-Kupplungseinrichtung**
Clutch system with a hydraulically actuated multiple clutch arrangement
Système d'embrayage comprenant un dispositif d'embrayage multiple à commande hydraulique

(30) Priorität: 07.09.2001 DE 10143834
(43) Veröffentlichungstag der Anmeldung: 01.08.2007
(62) Teilanmeldung aus: 06007023.2
(73) Patentinhaber: ZF Friedrichshafen AG, 88046 Friedrichshafen (DE)
(72) Erfinder: Ebert, Angelika, 97453 Schonungen-Forst (DE); Grosspietsch, Wolfgang, 97422 Schweinfurt (DE); Kraus, Paul, 97464 Niederwern (DE); Kuhstrebe, Jochen, 97318 Biebelried/Westheim (DE); Kundermann, Wolfgang, 97422 Schweinfurt (DE); Reisser, Wolfgang, 71296 Heimsheim (DE); Steiner, Eduard, 97070 Rottendorf (DE)
(74) Vertreter: 2SPL Patentanwälte PartG mbB

(56) Entgegenhaltungen:
- EP-A1- 1 297 304
- WO-A-01/42673
- DE-A- 10 004 179
- DE-A1- 4 113 166
- DE-A1- 4 224 360
- DE-A1- 4 322 406
- DE-A1- 10 064 459
- DE-A1- 19 809 534
- DE-A1- 19 821 164
- DE-A1- 19 941 837
- DE-C- 898 240
- DE-C2- 4 239 233
- DE-T2- 69 302 063
- FR-A1- 2 745 871
- GB-A- 1 348 645
- US-A- 2 919 778
- US-A- 3 059 746
- US-A- 3 365 985
- US-A- 4 463 621
- US-A- 4 732 253
- US-A- 4 741 422
- US-A- 4 787 492
- US-A- 5 857 549

## Beschreibung

### Technisches Geblet

Die Erfindung betrifft eine Mehrfach-Kupplungseinrichtung, ggf. Doppel-Kupplungseinrichtung, nach den Oberbegiff des Anspruchs 1.

### Stand der Technik

Mehrtach-Kupplungseinrichtungen, speziell Doppel-Kupplungseinrichtungen der eingangs angesprochenen Art sind beispielsweise aus der DE 100 04 179 A1 bekannt. Derartige, auch als Doppelkupplungen bezeichnete Kupplungseinrichtungen haben in jüngerer Zeit ein größeres Interesse gefunden, da sie in Verbindung mit einem so genannten Lastschalt- oder Doppelkupplungsgetriebe bei entsprechender Automatisierung einen Fahrkomfort zu bieten versprechen, der dem Fahrkomfort eines herkömmlichen Automatikgetriebes mit Drehmomentwandler entspricht, ohne dass die Verluste eines Drehmomentwandlers auftreten. Ein wichtiger Faktor bei der Auslegung der Kupplungseinrichtungen ist der für die Kupplungseinrichtung benötigte Bauraum, insbesondere der benötigte axiale Bauraum, das Gewicht der Kupplungseinrichtung und die Dichtheit und Dauerfestigkeit von Drehzuführungen zurZufuhrvon Betriebsmedium bzw. Hydraulikdruckmedium.

Bei den aus der DE 100 04 179 A1 bekannten Konstruktionen ist getriebeseitig eine Anschlusshülse vorgesehen, die eine mit Ölkanälen ausgeführte, an der radial äußeren Getriebeeingangswelle gelagerte Lagerhülse der Doppelkupplungen aufnimmt und mit dieser Drehdurchführungen bildet. Sowohl die Zufuhr des Hydraulikmediums zu den beiden Nehmerzylindem als auch die Zufuhr von Kühlöl erfolgt von der Getriebeseite her unter Vermittlung der Lagerhülse und der Aufnahmehülse.

Die Lagerhülse und die zugeordneten Aufnahmehülsen weisen ein zumindest nach heutigen Maßstäben nicht unerhebliches Gewicht auf und tragen auch nicht unerheblich zur axialen Gesamt-Baulänge der Kupplungseinrichtung bei.

Eine derartige Doppelkupplungseinrichtung ist aus der schon erwähnten DE 100 04 179 A1 bekannt. Die beiden Außenlamellenträger weisten jeweils einen an der oben schon erwähnten Hülse angebrachten Trägerabschnitt auf, der sich von der Hülse (also von radial innen) zum Lamellenhalteabschnitt (also nach radial außen) erstreckt.

Demgegenüber schlägt die Erfindung eine Mehrfachkuppwagseinrichtung nach Anspruch 1 vor.

Der Erfindungsvorschlag eröffnet viele Vorteile. So kann die Kupplungseinrichtung besonders kompakt ausgeführt werden. Ferner wird die Möglichkeit eröffnet, die beiden Außenlamellenträger einfach durch Ineinanderstecken zur gemeinsamen Drehung miteinander zu verbinden, wobei vorzugsweise den Außenlamellen des radial äußeren Lamellenpakets zugeordnete Mitnahmeformationen am betreffenden Trägerabschnitt ausgenutzt werden, die mit entsprechenden Gegen-Mitnahmeformationen am Trägerabschnitt des zum radial inneren Lamellenpaket zugehörigen Außenlamellenträgers zusammenwirken.

Die Erfindung stellt ferner einen Kraftfahrzeug-Antriebsstrang bereit, der eine vorzugsweise als Verbrennungsmotor ausgeführte Antriebseinheit, ein Getriebe (insbesondere Lastschaltgetriebe) und eine erfindungsgemäße Kupplungseinrichtung aufweist.

Die Erfindung wird im Folgenden anhand von in den Figuren gezeigten Ausführungsbeispielen näher erläutert.
- Fig. 1: zeigt in einer geschnittenen Darstellung eine in einem Antriebsstrang eines Kraftfahrzeugs zwischen einem Getriebe und einer Antriebseinheit (nicht dargestellt) angeordnete Doppelkupplung mit zwei nasslaufenden LamellenKupplungsanordnungen, die auf hydraulischem Wege betätigbar sind.
- Fig. 2: zeigt eine Detailvergrößerung der Fig. 1 im Bereich einer der Doppelkupplung zugehörigen Drehdurchführung.
- Fig. 3: zeigt in einer Fig. 2 entsprechenden Darstellung eine Ausführungsvariante für eine Drehdurchführung der Doppelkupplung.
- Fig.4: zeigt in einer Fig. 1 entsprechenden Darstellung ein weiteres Ausführungsbeispiel einer erfindungsgemäßen Doppelkupplung.

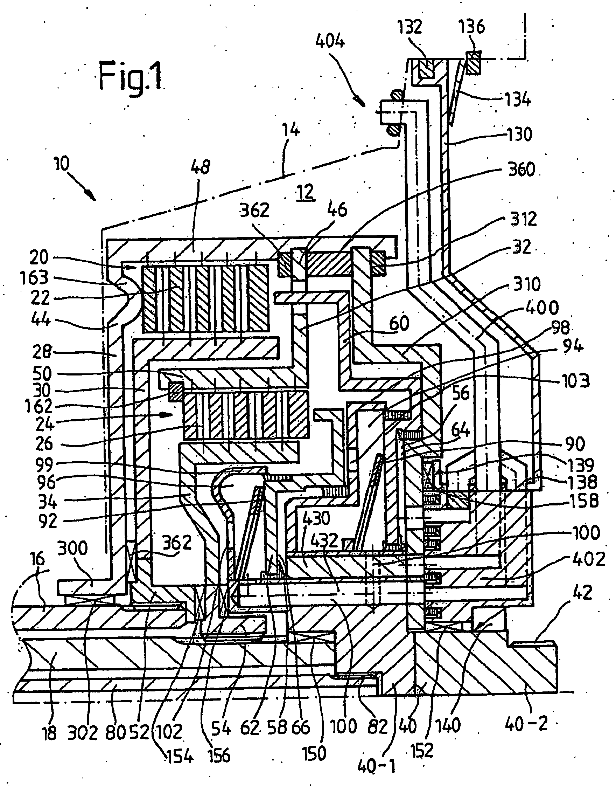

Fig. 1 zeigt eine so genannte Doppelkupplung 10, die in einem Aufnahmeraum 12 einer Getriebegehäuseglocke 14 eines so genannten Lastschaltgetriebes mit zwei radial geschachtelten Getriebeeingangswellen 16 und 18 angeordnet ist. Der äußeren Getriebeeingangswelle 16 können beispielsweise die Getriebegänge 2, 4 und 6 und der inneren Getriebeeingangswelle 18 können beispielsweise die Getriebegänge 1, 3 und 5 sowie R (Rückwärtsgang) zugeordnet sein.

Die Doppelkupplung weist eine radial äußere Kupplungsanordnung 20 mit einem Lamellenpaket 22 und eine radial innere Kupplungsanordnung 24 mit einem Lamellenpaket 26 auf. Die Außenlamellen des Lamellenpakets 22 werden durch einen Außenlamellenträger 28 zur gemeinsamen Drehung mit diesem gehalten. Die Innenlamellen dieses Lamellenpakets 22 werden durch einen Innenlamellenträger 30 zur gemeinsamen Drehung mit diesem gehalten. Die Außenlamellen des Lamellenpakets 26 werden durch einen Außenlamellenträger 32 zur gemeinsamen Drehung mit diesem gehalten, der selbst vom Außenlamellenträger28 gehalten und mit diesem zur gemeinsamen Drehung verbunden ist. Die Innenlamellen dieses Lamellenpakets 24 werden durch einen Innenlamellenträger 34 zur gemeinsamen Drehung mit diesem gehalten. Das Lamellenpaket 22 umschließt radial außen das Lamellenpaket 26.

Das Antriebsmoment von der Antriebseinheit wird in eine Eingangsnabe 40 der Doppelkupplung eingeleitet, und zwar über Mitnahmeformationen 42, ggf. eine Steckverzahnung 42, der Eingangsnabe 40. Die Eingangsnabe ist beim vorliegenden Beispiel mehrteilig aufgeführt und weist ein die Mitnahmeformationen 42 aufweisendes Teil und Mitnahmeformationen 82, ggf. Steckverzahnungen 82, aufweisendes Teil auf, über die eine sich durch die Getriebeeingangswellen 16 und 18 erstreckende Pumpenantriebswelle 80 mit der Eingangsnabe 40 zur gemeinsamen Drehung verbunden ist. Die beiden Teile der Eingangsnabe werden im Folgenden unter den Bezugszeichen 40-1 und 40-2 angesprochen. Das Antriebsmoment kann von der Antriebseinheit über eine Torsionsschwingungsdämpferanordnung oder Zwei-Massen-Schwungrad-Anordnung auf die Eingangsnabe 40 übertragen werden (vgl. DE 100 04 179 A1).

Ähnlich wie bei derbekannten Konstruktion gemäß DE 100 04 179 A1 wird das vermittels der Mitnahmeformationen 42 auf die Eingangsnabe 40 übertragene Antriebsmoment über einen Mitnehmer 310, der beispielsweise an der Eingangsnabe 40 angeschweißt oder über Mitnahmeformationen und Befestigungsmittel unverdrehbar an dieser gehalten ist, auf einen Außenlamellenträger-Lamellenhalteabschnitt 48 der radial äußeren Kupplungsanordnung 20 übertragen. Der Mitnehmer 310 ist durch einen Sicherungsring 312 in Richtung zur Antriebseinheit am Abschnitt 48 axial gesichert.

Der sich im Wesentlichen in axialer Richtung erstreckende Lamellenhalteabschnitt 48, der die Eingangsseite der radial äußeren Kupplungsanordnung 20 bildet, schließt sich an einen sich im Wesentlichen in radialer Richtung erstreckenden Trägerabschnitt 44 an, der radial innen einen Hülsenabschnitt 300 aufweist, der über ein Radiallager 302 an der radial äußeren Getriebeeingangswelle 16 gelagert ist. Der Außenlamellenträger 32 weist einen in Mitnahmeformationen des Lamellenhalteabschnitts 48 mit entsprechenden Gegen-Mitnahmeformationen eingreifenden Trägerabschnitt 46 auf, der sich vom Lamellenhalteabschnitt 48 nach radial innen erstreckt, und an den sich ein sich im Wesentlichen in axialer Richtung erstreckender Lamellenhalteabschnitt 50 anschließt. Der Trägerabschnitt 46 ist in Richtung zur Antriebseinheit über einen Abstandsring 360 und den Mitnehmer 310 am Sicherungsring 312 abgestützt und ist in Richtung zum Getriebe an einem Sicherungsring 362 abgestützt.

Je nach Einkuppelzustand der beiden Kupplungsanordnungen wird das Drehmoment vom betreffenden Außenlamellenträger über das betreffende Lamellenpaket auf den betreffenden Innenlamellenträger 30 bzw. 34 und von diesem auf die dem Innenlamellenträger 30 zugeordnete Getriebeeingangswelle 16 bzw. auf die dem Innenlamellenträger 34 zugeordnete Getriebeeingangswelle 18 übertragen. Hierzu weisen die Innenlamellenträger jeweils eine Koppelnabe 52 bzw. 54 auf, die auf der zugeordneten Getriebeeingangswelle sitzt und über Mitnahmeformationen mit dieser zur gemeinsamen Drehung verbunden ist.

Die beiden Kupplungsanordnungen werden über einen jeweiligen, in die Doppelkupplung integrierten, sich im Betrieb mitdrehenden hydraulischen Nehmerzylinder 56 bzw. 58 betätigt, die einen Betätigungskolben 60 bzw. 62 aufweisen. Eine jeweilige Druckkammer 64 bzw. 66 der Nehmerzylinder ist über eine noch zu beschreibenden Drehdurchführung und eine flexible Leitungsanordnung 400 an einer zugeordneten Hydraulikdruckquelle, beispielsweise eine Steuer/Regel-Ventilanordnung, angeschlossen.

Bei den beiden Kupplungsanordnungen handelt es sich um Kupplungsanordnungen des NORMA-LERWEISE-OFFEN-Typs. Hierzu sind von Tellerfedern oder dergleichen gebildete Rückstellfederanordnungen 90 und 92 vorgesehen, die vorliegend in einer jeweiligen, dem Betätigungskolben 60 bzw. 62 zugeordneten Fliehkraftdruckausgleichskammer 94 bzw. 96 aufgenommen sind. Die Fliehkraftdruckausgleichskammern sind zwischen dem jeweiligen Betätigungskolben 60 bzw. 62 und einer an der Eingangsnabe 40 (Teil 40-1) angebrachten Wandung 98 bzw. 99 ausgebildet. In Fig. 1 sind verschiedene, den Druckkammem und den Fliehkraftdruckausgleichskammem zugeordnete Dichtungen eingezeichnet, deren Funktion sich dem Fachmann aus der Zeichnung unmittelbar erschließt. Zur Funktion der Fliehkraftdruckausgleichskammern wird auf die DE 100 04 179 A1 verwiesen.

Die Fliehkraftdruckausgleichskammern 94 und 96 werden über eine in der Eingangsnabe 40 ausgebildete Kühlölkanalanordnung 100, sowie über die Drehdurchführung und die flexible Leitungsanordnung 400 mit Kühlöl von einer Kühlölversorgung, beispielsweise der erwähnten Ölpumpe, versorgt. Das Kühlöl füllt die jeweilige Fliehkraftdruckausgleichskammer und wirkt insoweit fliehkraftbedingten Hydraulikdruckerhöhungen in der jeweiligen Druckkammer, die auf den jeweiligen Betätigungskolben wirken, entgegen. Aus den Druckausgleichskammern entweicht im Betrieb ein Kühlölstrom durch jeweils wenigstens eine Öffnung 102 bzw. 103 in der betreffenden Wandung 98 bzw. 99. In den Lamellenhalteabschnitten sind Durchtrittsöffnungen für das Kühlöl vorgesehen, so dass das Kühlöl zwischen die Lamellen der Lamellenpakete eintreten und die Lamellen kühlen kann.

Ein die Doppelkupplung 10 enthaltender Teil des Aufnahmeraums 12 dient als Nassraum und ist durch eine deckelartige Verschlusswandung 130, die eine Zentralöffnung für die Eingangsnabe 40 und einen Statorabschnitt 402 der Drehdurchführung aufweist, in Richtung zur Antriebseinheit verschlossen. 132 bezeichnet einen Dichtring, und die im Folgenden nur als Deckel bezeichnete Verschlusswandung 130 ist durch einen Federring 134 gesichert, der sich an einem an der Gehäuseglocke 14 eingesetzten Sicherungsring 136 abstützt.

Die Doppelkupplung 10 ist vermittels ihrer Eingangsnabe 40 über ein Radiallager 150 an der radial inneren Getriebeeingangswelle 18 sowie über ein Radiallager 152 und den Statorabschnitt 402 an einem sich axial erstreckenden, radial inneren Abschnitt 138 des Deckels 130 radial gelagert. Axial ist die Doppelkupplung vermittels ihrer Eingangsnabe über zwei Axiallager 154 und 156 sowie die Koppelnaben 52 und 54 an der radial äußeren Getriebeeingangswelle 16 in Richtung zum Getriebe abgestützt. In Richtung zur Antriebseinheit (Motor) ist die Doppelkupplung 10 über ein zwischen dem Mitnehmer 310 und einem sich an den Abschnitt 138 anschließenden, sich wieder nach radial innen erstreckenden Abschnitt 139 des Deckels 130 angeordnetes Axiallager 158 am Deckel 130 abgestützt. Der als Tellerfeder ausgeführte Federring 134 sorgt dabei für einen Toleranzausgleich. Zu dieser Abstützung trägt auch die Anlage des radial inneren Abschnitts des Mitnehmers 310 am am Deckel 130 befestigten Statorabschnitt 402 der Drehdurchführung bei, und es ist in diesem Zusammenhang auch auf ein Axiallager 362 hinzuweisen, das zwischen den Lamellenträgem 28 und 30 wirksam ist.

Wie aus Fig. 1 zu erkennen, verläuft die flexible Leitungsanordnung 400 im Nassraum zwischen dem Deckel 130 und der Doppelkupplung 10. Ein Anschluss der Leitungsanordnung 400 an einer getriebeseitigen Anschlussstelle kann über eine Steckverbindung 404 realisiertsein, die beim Ausführungsbeispiel radial relativ weit außen liegt und unter Einsatz einfacher O-Ringe ausgeführt ist, die zur Abdichtung dienen.

Die Leitungsanordnung 400 weist eine der Druckkammer 64 zugeordnete Leitung, über die der hydraulische Nehmerzylinder 56 an der zugeordneten Hydraulikdruckquelle angeschlossen bzw. anschließbarist, eine der Druckkammer 66 zugeordnete Leitung, überdie der hydraulische Nehmerzylinder 58 an der zugeordneten Hydraulikdruckquelle angeschlossen bzw. anschließbar ist, und eine gemeinsam den Druckausgleichsräumen 94 und 66 zugeordnete Leitung auf. Die Leitungen sind jeweils mit einem zugeordneten Anschluss des Statorabschnitts 402 der Drehdurchführung verbunden. Der Statorabschnitt 402 ist am Deckel 130 fest und dichtend angebracht. Zwischen dem Statorabschnitt 402 und der Eingangsnabe 40 ist eine Dichtungsanordnung 140 (ggf. umfassend einen Radialwellendichtring) wirksam.

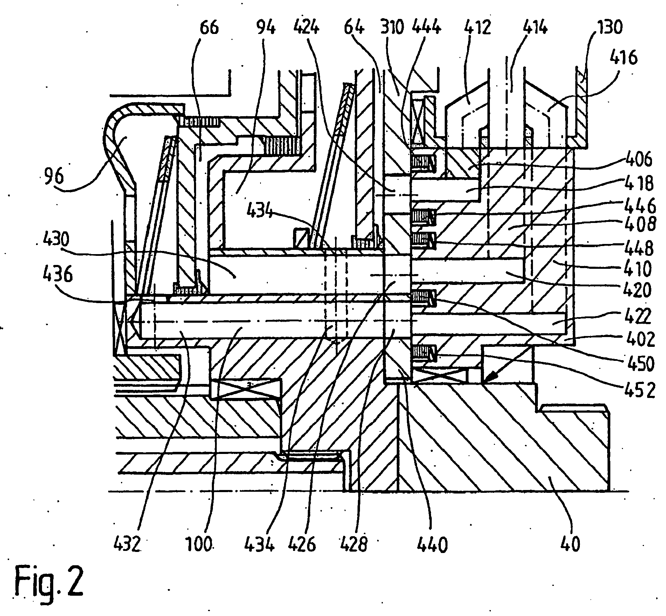

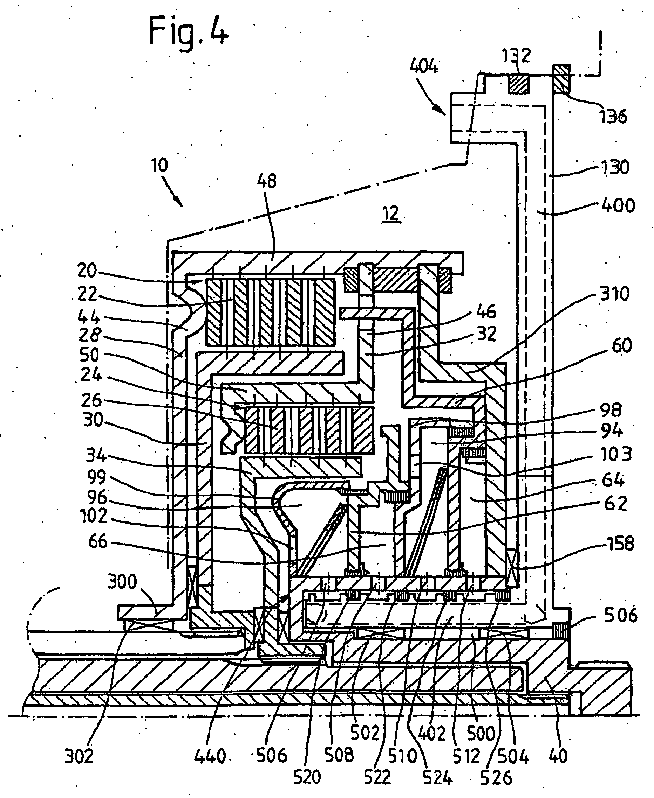

Der Statorabschnitt 402 weist drei axial und in Umfangsrichtung gegeneinanderversetzte, sich in radialer Richtung erstreckende Kanäle 406, 408 und 410 auf (vgl. Fig. 2), denen die genannten drei Leitungen (denen in Fig. 4 die Bezugszeichen 412, 414 und 416 zugeordnet sind) angeschlossen sind und die nach radial innen in einen jeweiligen, im Statorabschnitt 402 ausgebildeten Ringkanal 418, 420 bzw. 422 münden.

Den Ringkanälen sind Durchgangsbohrungen 424, 426 und 428 im Mitnehmer 310 zugeordnet, von denen wenigstens eine Durchgangsbohrung 424 in die Druckkammer 64 mündet und von denen die Durchgangsbohrungen 426 und 428 an Axialbohrungen 430 und 432 im Teil 40-1 der Eingangsnabe angeschlossen sind. Es sei darauf hingewiesen, dass in Umfangsrichtung mehrere Durchgangsbohrungen 424, mehrere Durchgangsbohrungen 426 und mehrere Durchgangsbohrungen 428 gegeneinanderversetztvorgesehen sein können, und dass dementsprechend in Umfangsrichtung mehrere Axialbohrungen 430 und mehrere Axialbohrungen 432 gegeneinander versetzt vorgesehen sein können. Die wenigstens eine Axialbohrung 430 mündet in die Druckkammer 66. Die wenigstens eine Axialbohrung 432 bildet mit wenigstens einer Radialbohrung 434 und wenigstens einer Radialbohrung 436 die Kühlölkanalanordnung 100, die mit ihren Bohrungen 434 und 436 in die Druckausgleichkammern 94 und 96 mündet.

Ein die Durchgangsbohrungen 424, 426 und 428 aufweisender radial innerer Abschnitt des Mitnehmers 310 bildet einen Rotorabschnitt 440 der Drehdurchführung. Zur Abdichtung der Ringkanäle 418, 420 und 422 und der Durchgangsbohrungen 424, 426 und 428 sind ringförmige Dichtungen 444, 446, 448,450 und 452 in eine jeweilige Ringausnehmung des Statorabschnitts 402 eingesetzt, wobei die Dichtungen 444 und 446 den Ringkanal 418, die Dichtungen 448 und 450 den Ringkanal 420 und die Dichtungen 450 und 452 den Ringkanal 422 radial eingabeln. Die Dichtungen sind durch Federelemente gegen den Rotorabschnitt 440 des Mitnehmers 310 gepresst, so dass eine Gleitringdichtung gebildet ist.

Gemäß Vorstehendem ist der hydraulische Nehmerzylinder 56 über die wenigstens eine Durchgangsbohrung 424, den Ringkanal 418, die Bohrung 406 und die Leitung 412 an der zugeordneten Hydraulikdruckquelle angeschlossen oder anschließbar, ist der hydraulische Nehmerzylinder 58 über die wenigstens eine Axialbohrung 430, die wenigstens eine Durchgangsbohrung 426, den Ringkanal 420, die Bohrung 408 und die Leitung 414 an der zugeordneten Hydraulikdruckquelle angeschlossen und sind die Druckausgleichskammern 94 und 96 über die Bohrungen 434 und 436, die wenigstens eine Axialbohrung 432, die wenigstens eine Durchgangsbohrung 428, den Ringkanal 422, die Bohrung 410 und die Leitung 416 an der zugeordneten Kühlölquelle angeschlossen.

Bei der beschriebenen Ausführungsform wird der Statorabschnitt 402 an den Rotorabschnitt 440 vermittels des Deckels 130 axial angepresst, und zwar unter der Wirkung der Ringfeder 134. Anstelle gegenüber dem Deckel 130 gesondert verlaufenden Leitungen könnte man die Leitungen auch am Deckel festlegen oder einen Deckel verwenden, der darin integral ausgeführte Leitungen aufweist. Beispielsweise könnte man den Deckel als Druckgussteil ausführen. In diesem Falle könnte auch der Statorabschnitt 402 im Deckel integriert sein.

Weitere Einzelheiten, die Bedeutung und Funktion einzelner Komopnenten des Ausführungsbeispiels usw. sind dem Fachmann aus Fig. 1 und Fig. 2 ohne Weiteres verständlich. So bezeichnet 162 einen am Außenlamellenträger 32 angebrachten Halte- oder Sicherungsring, der die Außenlamellen am Lamellenhalteabschnitt sichert und die axialen Betätigungskräfte beim Einrücken der betreffenden Kupplungsanordnung aufnimmt. Eine Einbiegung 163 des Außenlamellenträgers 28 stützt in entsprechender Weise das Lamellenpaket 22 bei der Betätigung der Kupplungsanordnung 20 axial ab. Beim gezeigten Beispiel sind die Außenlamellen vergleichsweise massiv als reibbelaglose Lamellen ausgeführt, und die Innenlamellen sind als Belaglamellen ausgeführt. Zur vorteilhaften Ausgestaltungen der Lamellenpakete wird beispielsweise auf die DE 100 04 179 A1 verwiesen, die dem Fachmann auch weitere, das Verständnis der Konstruktion gemäß Fig. 1 erleichternde Hintergrundinformationen gibt.

Die Doppelkupplung 10 kann beispielsweise wie folgt aus Einzelteilen zusammengebaut und in einem Kraftfahrzeug-Antriebsstrang montiert werden. Zuerst wird der Innenlamellenträger 30 der radial äußeren Kupplungsanordnung in den Außenlamellenträger 28 dieser Kupplungsanordnung eingelegt. Anschließend wird das Lamellenpaket 22 axial eingeschoben und der Sicherungsring 362 montiert. Anschließend wird der Außenlamellenträger 32 der radial inneren Kupplungsanordnung eingelegt, an dem der Sicherungsring 162 schon angebracht sein kann. Es wird dann das Lamellenpaket 26 eingeschoben, bevor oder nachdem der Innenlamellenträger 34 der radial inneren Kupplung eingelegt wird bzw. worden ist.

Unabhängig hiervon wird der Mitnehmer mit der Eingangsnabe 40 verbunden, beispielsweise durch Schweißen. Es kann dann der Kolben 60 eingelegt und es können die Rückstellfedern 90 eingelegtwerden, worauf die Wandung 98 an der Eingangsnabe 40 angeschweißt wird. Daraufhin können der Betätigungskolben 62 und die Rückstellfedern 92 eingelegt und die Wandung 99 an der Eingangsnabe angeschweißt werden.

Zuletzt wird der die Eingangsnabe 40 und den Mitnehmer310 umfassende Zusammenbau mit dem Mitnehmer in den Außenlamellenträger 28 der radial äußeren Kupplungsanordnung eingeschoben, wobei zuvor der Abstandsring 360 zu montieren ist. Der Mitnehmer 310 wird dann durch den Sicherungsring 312 am Außenlamellenträger 28 gesichert. Die damit im Wesentlichen fertig zusammengebaute Doppelkupplung kann dann als Modul auf die Getriebeeingangswellen 16 und 18 und die Pumpenantriebswelle 80 aufgeschoben und damit am Getriebe montiert werden. Als letztes werden die Leitungsanordnung 400 angeordnet und der Deckel 130 in die Gehäuseglocke eingesetzt und unter Vorspannung gegen den Mitnehmer 310 gepresst, so dass der Statorabschnitt 402 am Rotorabschnitt 440 unter Vorspannung anliegt. Diese Vorspannung des Deckels in Richtung zum Getriebe wird durch die Federanordnung, ggf. Tellerfeder 134, erreicht, die einerseits einen Toleranzausgleich erreicht und andererseits in Verbindung mit den den Dichtungen 444, 446, 448, 450 und 452 zugeordneten Federelementen zur Dichtheit der Drehdurchführung 402, 440 sorgt.

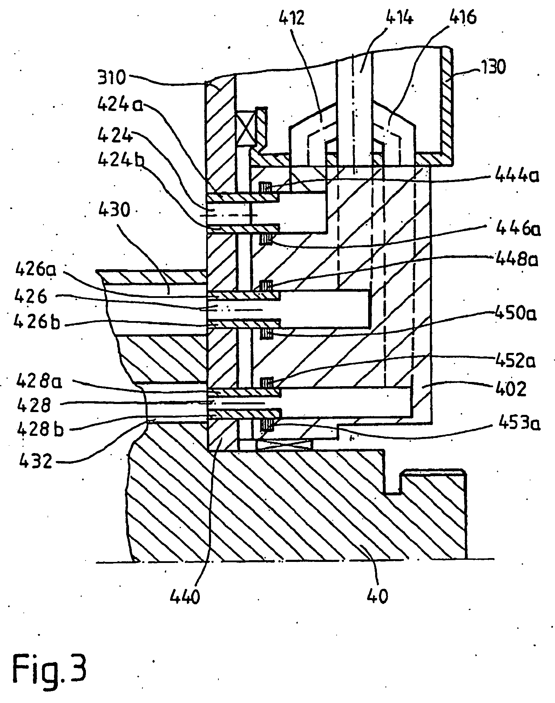

Fig. 3 zeigt eine Ausführungsvariante für die Drehdurchführung des Ausführungsbeispiels der Fig. 1. Anstelle der axial wirkenden Dichtungen 444, 446, 448, 450 und 452 sind radial wirkende Dichtringe 444a, 446a, 448a, 450a, 452a und 453a vorgesehen, die zwischen dem Statorabschnitt 402 und Ringblechen 424a, 424b, 426a, 426b, 428a, 428b wirksam sind, die am Mitnehmer 310 festgelegt und paarweise den Durchgangsbohrungen 424, 426 und 428 zugeordnet sind. Die Ringbleche sind vorzugsweise am Mitnehmer310 angeschweißt und greifen mit einem jeweiligen Abschnitt in die Durchgangsbohrungen ein, wie in Fig. 3 gezeigt ist.

Fig. 4 zeigt ein weiteres Ausführungsbeispiel für eine erfindungsgemäße Doppelkupplung. Es werden nur die Unterschiede gegenüber dem Ausführungsbeispiel der Fig. 1 und 2 erläutert, wobei darauf hingewiesen wird, dass für analoge oder entsprechende Komponenten die gleichen Bezugszeichen verwendet sind.

Beim Ausführungsbeispiel der Fig. 4 ist der Deckel 130 als Druckgussteil ausgeführt, in dem die Leistungsanordnung 400 integriert ist. Mit dem Deckel ist ferner ein hülsenartiger Statorabschnitt 402 einstückig ausgeführt, der sich in axialer Richtung erstreckt und in eine zugeordete Aufnahme 500 der Eingangsnabe 40 eingreift. Zwischen dem Statorabschnitt 402 und der Eingangsnabe 40 sind in dem Aufnahmeraum 500 angeordnete Radiallager 502 und 504 sowie ein Dichtungsring 506 und Dichtringe 520, 522, 524, 526 wirksam. In Richtung zur Antriebseinheit stützt sich die Doppelkupplung unter Vermittlung des Mitnehmers 310 über ein Axiallager 158 am Deckel 130 ab, der sich seinerseits am Sicherungsring 136 abstützt.

Die Eingangsnabe 40 weist in einem die Aufnahme 500 nach radial außen begrenzenden Wandungsabschnitt Bohrungen 506, 508, 510 und 512 auf, die in den Fliehkraftdruckausgleichraum 96, in die Druckkammer 66, in den Fliehkraftdruckausgleichraum 94 bzw. in die Druckkammer64 münden. DerRotorabschnitt 402 weist entsprechende Bohrungen oder Öffnungen auf, über die die Bohrungen 406, 408, 410 und 412 und damit die Druckausgleichskammern 96 und 94 bzw. die Druckkammern 66 und 64 an der jeweils zugeordneten Leitung der Leitungsanordnung 400 angeschlossen sind. Zwischen der die Bohrungen 506, 508, 510 und 512 aufweisenden Wandung und dem Statorabschnitt 402 sind die schon erwähnten Dichtungsringe 520, 522, 524, 526 wirksam, die das Kühlöl und das Hydraulikdruckmedium voneinander trennen und in Verbindung mit dem Dichtungsring 506 für eine Abdichtung derbeim Ausführungsbeispiel realisierten radialen Drehdurchführung (im Gegensatz zu einer axialen Drehdurchführung bei den Ausführungsbeispielen der Fig. 1 bis 3) nach außen sorgen. Als Rotorabschnitt 440 der Drehdurchführung kann der die Aufnahme 500 aufweisende Abschnitt der Eingangsnabe 40 aufgefasst werden.

Der Zusammenbau der Doppelkupplung 10 gemäß Fig. 4 kann in gleicher Weise wie beim Ausführungsbeispiel der Fig. 1 und 2 erfolgen. Der Gehäusedeckel 130, der die Leitungsanordnung 400 und den Rotorabschnitt 402 aufweist, wird als letztes eingebaut und hierbei mit dem Rotorabschnitt 402 in die Aufnahme 500 axial eingeschoben. Als letztes wird der Sicherungsring 136 montiert, wobei ggf. ähnlich wie bei Fig. 1 eine Federanordnung zwischen dem Sicherungsring und dem Deckel 130 vorgesehen sein kann, die den Deckel in Richtung zum Getriebe vorspannt, so dass ein Toleranzausgleich erreicht wird und Axialbewegungen aufgenommen werden. Eine andere Möglichkeit, Toleranzen und/oder Axialbewegungen auszugleichen, ist das Vorsehen einer entsprechenden Federanordnung zwischen dem Mitnehmer 310 und dem Deckel 130 im Bereich des Axiallagers 158; das beispielsweise mit einem entsprechenden Federelement gekoppelt sein könnte.

## Patentansprüche

1. Mehrfach-Kupplungseinrichtung, ggf. Doppel-Kupplungseinrichtung (10), für die Anordnung in einem Antriebsstrang eines Kraftfahrzeugs zwischen einer Antriebseinheit und einem Getriebe,
wobei die Kupplungseinrichtung eine einer ersten Getriebeeingangswelle (16) zugeordnete erste Kupplungsanordnung (20) und eine einer zweiten Getriebeeingangswelle (18) zugeordnete zweite Kupplungsanordnung (24) aufweist,
wobei die zweite Getriebeeingangswelle (18) sich durch die erste Getriebeeingangswelle (16) erstreckt,
wobei eine Eingangsseite der Kupplungseinrichtung eine an einer Abtriebswelle der Antriebseinheit direkt oder indirekt angekoppelte oder ankoppelbare Eingangsnabe (40) oder Eingangswelle aufweist, die mit einer Eingangsseite (48) der ersten Kupplungsanordnung und einer Eingangsselte (50) der zweiten Kupplungsanordnung in Drehmitnahmeverbindung steht, und
wobei die Kupplungsanordnungen (20, 24) jeweils mit einem integrierten, sich im Betrieb mitdrehenden hydraulischen Nehmerzylinder (56, 58) und Betätigungskolben (60 bzw. 62) ausgeführt sind, über den die jeweilige Kupplungsanordnung auf hydraulischem Wege betätigbar ist;
wobei von einem ersten Lamellenpaket (22) der ersten Kupplungsanordnung und einem zweiten Lamellenpaket (26) der zweiten Kupplungsanordnung das erste Lamellenpaket (22) das zweite Lamellenpaket (26) zumindest in einem axialen Überlappungsbereich radial außen umgibt,
wobei die Eingangsnabe (40) mit einem Außenlamellenträger (28) der ersten Kupplungsanordnung und einem Außenlamellenträger (32) der zweiten Kupplungsanordnung in Drehmitnahmeverbindung steht,
wobei die Außenlamellenträger jeweils einen sich bezogen auf eine Drehachse der Kupplungseinrichtung im Wesentlichen axial erstreckenden, als Eingangsseite der jeweiligen Kupplungsanordnung dienenden Lamellenhalteabschnitt (48 bzw. 50) und einen sich von diesem in radialer Richtung anschließenden, mit dem Lamellenhalteabschnitt einstückigen oder daran fest angebrachten Trägerabschnitt (44 bzw. 46) aufweisen, und
wobei ein Innenlamellenträger (30) der ersten Kupplungsanordnung, der als Ausgangsseite der betreffenden Kupplungsanordnung dient, mit der ersten wobei ein innenlamellenträger (34) der zweiten Kupplungsanordnung der als ausgangsseite der betreffenden Kupplungs anordnung dient mit der zweiten Getriebe eingangswelle in Drehmitnahmeverbindung steht oder bringbar ist. Getriebeeingangswelle in Drehmitnahmeverbindung steht oder bringbar ist,
wobei der Betätigungskolben (60) der radial äußeren Kupplungsanordnung (20) Betätigungsabschnitte aufweist, welche sich im Wesentlichen in axialer Richtung durch Aussparungen im Trägerabschnitt (46) des Außenlamellenträgers (32) der radial inneren Kupplungsanordnung erstrecken, **dadurch gekennzeichnet,**
**dass** die sich durch die Aussparungen erstreckenden Betätigungsabschnitte an einer axial der Eingangsseite der Kupplungseinrichtung zugewandten Seite des Lamellenpakets der radial äußeren Kupplungsanordnung (20) angeordnet sind.

2. Kupplungseinrichtung nach Anspruch 1 **dadurch gekennzeichnet, dass** der zum radial inneren Lamellenpaket (26) zugehörige Außenlamellenträger (32) am Außenlamellenträger (28) des radial äußeren Lamellenpakets gehalten ist.

3. Kupplungseinrichtung nach einem der Ansprüche 1 oder 2**, dadurch gekennzeichnet, dass** die Kupplungseinrichtung in einen von einer Getriebegehäuseglocke (14) begrenzten Aufnahmeraum (12) aufgenommen ist, der durch eine ggf. deckelartige Wandung (130) in Richtung zur Antriebseinheit geschlossen ist und eine Öffnung zur Ankoppelung der Eingangsnabe (40) an einer Abtriebswelle der Antriebseinheit, ggf. über eine Torsionsschwingungsdämpferanordnung, aufweist.

4. Kraftfahrzeug-Antriebsstrang, umfassend eine vorzugsweise als Verbrennungsmotor ausgeführte Antriebseinheit, ein Getriebe, insbesondere Lastschaltgetriebe, und eine Kupplungseinrichtung nach einem der vorhergehenden Ansprüche.

## Claims

1. Multiple clutch device, if appropriate double clutch device (10), for arrangement in a drive train of a motor vehicle between a drive unit and a transmission,
the clutch device having a first clutch arrangement (20) assigned to a first transmission input shaft (16) and a second clutch arrangement (24) assigned to a second transmission input shaft (18),
the second two transmission input shaft (18) extending through the first transmission input shaft (16),
an input side of the clutch device having an input hub (40) or input shaft which is directly or indirectly coupled or coupleable to an output shaft of the drive unit and which is in rotary take-up connection with an input side (48) of the first clutch arrangement and with an input side (50) of the second clutch arrangement, and
the clutch arrangements (20, 24) each being configured with an integrated, hydraulic slave cylinder (56, 58) rotary during operation and an actuating piston (60 or 62) via which the respective clutch arrangement can be actuated hydraulically;
of a first disk stack (22) of the first clutch arrangement and of a second disk stack (26) of the second clutch arrangement, the first disk stack (22) surrounding the second disk stack (26) radially on the outside at least in an axial overlap region,
the input hub (40) being in rotary take-up connection with an outer disk carrier (28) of the first clutch arrangement and with an outer disk carrier (32) of the second clutch amangement,
the outer disk carriers having in each case a disk-holding portion (48 or 50) extending essentially axially with respect to an axis of rotation of the clutch device and serving as an input side of the respective clutch arrangement, and a carrier portion (44 or 46), which adjoins the said disk-holding portion in radial direction, is in one piece with the disk-holding portion or is attached firmly to it,
and an inner disk carrier (30) of the first clutch arrangement, which inner disk carrier serves as an output side of the respective clutch arrangement, being in or being capable of being brought into rotary take-up connection with the first transmission input shaft, an inner disk carrier (34) of the second clutch arrangement, which inner disk carrier serves as an output side of the respective clutch arrangement, being in or being capable of being brought into rotary take-up connection with the second transmission input shaft,
the actuating piston (60) of the radially outer clutch arrangement (20) comprising actuating portions which extend essentially in axial direction through clearances in the carrier section (46) of the outer disk carrier (32) of the radially inner clutch arrangement, **characterized**
**in that** the actuating portions extending through the clearances are arranged at a side of the disc stack of the radially outer clutch arrangement (20) which faces the input side of the clutch arrangement axially.

2. Clutch device according to Claim 1, **characterized**
**in that** the outer disk carrier (32) belonging to the radially inner disk stack (26) is held on the outer disk carrier (28) of the radially outer disk stack.

3. Clutch device according to one of Claims 1 or 2, **characterized in that** the clutch device is received in a reception space (12) which is delimited by a transmission housing bell (14) and which is closed in the direction of the drive unit by means of an, if appropriate, lid-like wall (130) and has an orifice for coupling the input hub (40) to an output shaft of the drive unit, if appropriate via a torsional vibration damper arrangement.

4. Motor vehicle drive train, comprising a drive unit preferably designed as an internal combustion engine, a transmission, in particular a power-shift transmission, and a clutch device according to one of the preceding claims.

## Revendications

1. Dispositif d'embrayage multiple, éventuellement dispositif de double embrayage (10), destiné à être installé dans un train d'entraînement d'un véhicule automobile entre une unité d'entraînement et une boîte de vitesses,
le dispositif d'embrayage présentant un premier agencement d'embrayage (20) associé à un premier arbre d'entrée de boîte de vitesses (16) et un deuxième agencement d'embrayage (24) associé à un deuxième arbre d'entrée de boîte de vitesses (18),
le deuxième arbre d'entrée de boîte de vitesses (18) s'étendant à travers le premier arbre d'entrée de boîte de vitesses (16),
un côté d'entrée du dispositif d'embrayage présentant un moyeu d'entrée (40) ou un arbre d'entrée accouplé ou pouvant être accouplé directement ou indirectement à un arbre de sortie de l'unité d'entraînement, lequel moyeu est en liaison d'entraînement en rotation avec un côté d'entrée (48) du premier agencement d'embrayage et avec un côté d'entrée (50) du deuxième agencement d'embrayage, et
les agencements d'embrayage (20, 24) réalisé à chaque fois avec un cylindre récepteur hydraulique intégré étant rotatif en service (56, 58) et des pistons d'actionnement (60 ou 62), par lequel chaque agencement d'embrayage est actionnable par système hydraulique.
parmi un premier paquet de disques (22) du premier agencement d'embrayage et un deuxième paquet de disques (26) du deuxième agencement d'embrayage, le premier paquet de disques (22) entoure le deuxième paquet de disques (26) radialement à l'extérieur au moins dans une région de chevauchement axiale,
le moyeu d'entrée (40) étant en liaison d'entraînement en rotation avec un porte-disques extérieur (28) du premier agencement d'embrayage et un porte-disques extérieur (32) du deuxième agencement d'embrayage,
les porte-disques extérieurs présentant à chaque fois une portion de porte-disque (48 ou 50) s'étendant essentiellement axialement par rapport à un axe de rotation du dispositif d'embrayage, servant de côté d'entrée pour l'agencement d'embrayage respectif, et une portion de support (44 ou 46) se raccordant à celle-ci dans la direction radiale, d'une seule pièce avec la portion de porte-disque ou montée fixement sur celle-ci, et
un porte-disques intérieur (30) du premier agencement d'embrayage, qui sert de côté de sortie de l'agencement d'embrayage en question, étant ou pouvant être amené en liaison d'entraînement en rotation avec le premier arbre d'entrée de boîte de vitesses, un porte-disques intérieur (34) du deuxième agencement d'embrayage, qui sert de côté de sortie de l'agencement d'embrayage en question, étant ou pouvant être amené en liaison d'entraînement en rotation avec le deuxième arbre d'entrée de boîte de vitesses,
le piston d'actionnement (60) de l'agencement d'embrayage (20) radialement extérieur présentant des portions d'actionnement qui s'étendent essentiellement dans la direction axiale à travers des évidements dans la portion de support (46) du porte-disques extérieur (32) de l'agencement d'embrayage radialement intérieur, **caractérisé en ce que**
les portions d'actionnement s'étendant à travers des évidements sont disposées du côté du paquet de disques de l'agencement d'embrayage (20) radialement extérieur, lequel côté tourne axialement vers le côté d'entrée du dispositif d'embrayage.

2. Dispositif d'embrayage selon la revendication 1,
**caractérisé en ce que**
le porte-disques extérieur (32) associé au paquet de disques radialement intérieur (26) est maintenu sur le support de disques extérieur (28) du paquet de lamelles radialement extérieur.

3. Dispositif d'embrayage selon l'une quelconque des revendications 1 ou 2,
**caractérisé en ce que** le dispositif d'embrayage est reçu dans un espace de logement (12) limité par une cloche de carter de boîte de vitesses (14), lequel espace de logement est fermé par une paroi éventuellement de type couvercle (130) dans la direction de l'unité d'entraînement et présente une ouverture pour l'accouplement du moyeu d'entrée (40) à un arbre de sortie de l'unité d'entraînement, éventuellement par le biais d'un agencement amortisseur des oscillations de torsion.

4. Train d'entraînement de véhicule automobile, comprenant une unité d'entraînement réalisée de préférence sous forme de moteur à combustion, une boîte de vitesses, notamment une boîte de vitesses à changement de vitesses en charge, et un dispositif d'embrayage selon l'une quelconque des revendications précédentes.
